# EUROPEAN PATENT SPECIFICATION

(11) **EP 3 785 889 B1**
(45) Date of publication and mention of the grant of the patent: **27.09.2023**
(21) Application number: 20192374.5
(22) Date of filing: 24.08.2020
(51) Int. Cl.: B29C 70/38

(54) **A FIBRE LAYING AND/OR PLACEMENT DEVICE**
FASERLEGE- UND/ODER FASERPLATZIERUNGSVORRICHTUNG
DISPOSITIF DE POSE ET/OU DE PLACEMENT DE FIBRES

(30) Priority: 28.08.2019 TR 201913047
(43) Date of publication of application: 03.03.2021
(73) Proprietor: Tusas- Turk Havacilik Ve Uzay Sanayii Anonim Sirketi, 06980 Kazan/Ankara (TR)
(72) Inventor: DOLEK, Turker, 06980 Ankara (TR)
(74) Representative: Cayli, Hülya

(56) References cited:
- GB-A- 2 564 522
- US-A1- 2007 044 922
- US-B1- 6 390 169

## Description

The present invention relates to a fibre laying and/or placement device in which fibre laying and/or placement process is performed on a composite laying mould surface, and which enables the fibre to be laid and/or placed on the mould surface by applying force to the fibre.

Composite materials such as carbon fibre, glass fibre, aramid fibre etc., are widely used in white goods, automotive and aviation industries especially for their light-weight structures and high strength features. Within this context, production of products using composite materials and the use of fibre are of great importance. Rollers of said fibre laying and/or placement devices compacting the fibre are provided in a single form.

United States patent document no. US9348591, which is included in the known state of the art, discloses a compaction roller which is mechanically deformable. The system comprises a compaction roller which has segments conforming to different surface forms. However, for the compaction roller consisting of metal segments, there is not mentioned an efficient fibre laying and/or placement process on each composite laying mould surface. US2007044922 A1 discloses a compaction roller for a fiber placement machine including two internal bladders to apply pressure to circular segments able to adapt to the surface of the material to be compacted.

In the known state of the art, compaction rollers used for fibre laying and/or placement processes do not provide an effective pressurization. Surfaces of composite laying mould may comprise various concave and/or convex areas. In this case, compaction rollers applying constant pressure remain insufficient. Since the compaction rollers apply equal pressure to a composite laying mould surface at each area in concave and/or convex areas, the compaction roller is incapable of compacting the surface effectively. In this case, the desired quality production cannot be achieved.

An object of the present invention is to provide a fibre laying and/or placement device which enables the compaction rollers used in the composite product production for fibre laying and/or placement processes to be conformed to a surface, and thus, achieving a simple, practical, effective and efficient production.

Another object of the present invention is to provide a fibre laying and/or placement device which can apply different pressures to the fibre at different areas and in which laying bench performs the laying process in conformity with different surface shapes, without damaging the fibre fabrics.

A further object of the present invention is to provide a quick, efficient and effective compaction roller which can conform almost completely to composite laying mould surface.

The fibre laying and/or placement device realized to achieve the object of the invention and defined in the first claim and the claims dependent thereon comprises a body and a control unit which is located on the body and allows control of features such as pressurization speed and sensor control for fibre laying and/or placement processes on a composite laying mould. The control unit manages a pressurization unit which is located on the body and allows liquid and/or gas fluid to be stored and/or pressurized. There is provided at least one rod extending outwardly from the body and triggered by the control unit. This rod comprises thereon at least one compaction roller which is rotatable around its own axis and applies compaction force to the fibre to allow the fibre to be laid and/or placed on the composite laying mould. The fibre laying and/or placement device comprises a plurality of pressurization chambers which are located in the compaction roller and allowed to be fed with the liquid and/or gas fluid transmitted by the pressurization unit by means of the control unit.

The fibre laying and/or placement device of the invention comprises a compaction roller which has a plurality of pressurization chambers each pressurized differently from each other. Since the each pressurization chamber applies a different compaction force separately from each other, it is enabled that the compaction force is applied effectively to the composite laying mould surface.

In an embodiment of the present invention, the fibre laying and/or placement device comprises at least one transmission line which transmits liquid and/or gas fluid into the pressurization chamber by the pressurization unit by means of the control unit. Thanks to a plurality of transmission lines, transfer of liquid and/or gas fluid into the pressurization chambers each pressurized differently from each other can be enabled in a controlled manner.

In an embodiment of the present invention, the fibre laying and/or placement device comprises a compaction roller which has a first transmission line filling the first pressurization chamber and a second transmission line filling the second pressurization chamber, wherein the first transmission line and the second transmission line fill said pressurization chambers with liquid and/or gas fluid at different amounts and/or pressures. Due to the fact that the first pressurization chamber and the second pressurization chamber are fed by different transmission lines, controlled distribution of the liquid and/or gas fluid transferred into the pressurization chambers at different amounts and/or pressures can be enabled. On the other hand, the first transmission line and the second transmission line are allowed to be fed with liquid and/or gas fluid at different amounts and/or pressures.

In an embodiment of the present invention, the fibre laying and/or placement device comprises a compaction roller which has a first pressurization chamber located between the second pressurization chamber and the third pressurization chamber. Due to the fact that the first pressurization chamber is located between the second pressurization chamber and the third pressurization chamber, it is enabled to compact the desired composite laying mould surface form effectively and quickly.

In an embodiment of the present invention, the fibre laying and/or placement device comprises a compaction roller which has a first transmission line transferring liquid and/or gas fluid into the first pressurization chamber by the pressurization unit. It is enabled that the first pressurization chamber is pressurized differently from the second pressurization chamber and the third pressurization chamber. Therefore, the compaction roller provides a more effective pressurization at the area where the first pressurization chamber is provided.

In an embodiment of the present invention, the fibre laying and/or placement device comprises a second transmission line transferring liquid and/or gas fluid into the second pressurization chamber and the third pressurization chamber by the pressurization unit. Therefore, the second pressurization chamber and the third pressurization chamber are enabled to be pressurized differently from the first pressurization chamber. Thanks to the compaction roller conforming to the concave and/or convex composite laying mould surface shape, it is enabled that the speed of fibre laying and/or placement process is effectively increased.

In an embodiment of the present invention, the fibre laying and/or placement device comprises a compaction roller in which second pressurization chamber and third pressurization chamber are pressurized by the pressurization unit with liquid and/or gas fluid at almost completely the same amount and/or pressure. Thus, it is enabled that the desired composite laying mould surface form is compacted effectively and quickly.

In an embodiment of the present invention, the fibre laying and/or placement device comprises at least one connection element which is located on the rod such that it is rotatable around its own axis, and a compaction roller surrounding the connection element. Therefore, the control of rotational movement of the compaction roller around its own axis can be provided.

In an embodiment of the present invention, the fibre laying and/or placement device comprises a compaction roller which is made of polyurethane material. Therefore, the compaction roller is enabled to change the surface shape easily in conformity with the surface of the composite laying mould.

In an embodiment of the present invention, the fibre laying and/or placement device comprises at least one outer layer located on the compaction roller and which can be provided as painting or coating that protects the pressurization chambers by surrounding them.

In an embodiment of the present invention, the fibre laying and/or placement device comprises at least one temperature sensing element, such as a sensor, which is located on the body and transmits a temperature value to the control unit in the fibre laying and/or placement application performed on the composite laying mould. Thanks to the temperature sensing element, temperature value is enabled to be controlled before and/or during the fibre laying and/or placement process.

In an embodiment of the present invention, the fibre laying and/or placement device comprises at least one speed sensing element, such as a sensor, which is located on the body and receives the data of rotational speed, angular speed of the compaction roller from the control unit in the fibre laying and/or placement application performed on the composite laying mould. Thanks to the speed sensing element, various speed values are enabled to be controlled before and/or during the fibre laying and/or placement process.

In an embodiment of the present invention, the fibre laying and/or placement device comprises at least one pressure sensing element, such as a sensor, which is located on the body and transmits data of pressure value applied by the compaction roller to the mould in the fibre laying and/or placement application performed on the composite laying mould. Thanks to the pressure sensing element, pressure value is enabled to be controlled before and/or during the fibre laying and/or placement process.

In an embodiment of the present invention, the fibre laying and/or placement device comprises a compaction roller which has a first position (I) in which the compaction roller is held in a cylindrical form by pressurizing the first pressurization chamber, the second pressurization chamber and the third pressurization chamber almost the same, and a second position (II) in which the compaction roller is brought from the first position (I) such that it takes L, S form by pressurizing each pressurization chamber differently. Therefore, it is enabled that the composite laying mould surface having L, S form is compacted effectively and quickly.

In an embodiment of the present invention, the fibre laying and/or placement device comprises a compaction roller which has a cylindrical form in the first position (I), and an inclined form in the second position (II). Therefore, an effective and quick compaction is provided according to the concave and/or convex surface shapes of composite laying mould.

In an embodiment of the present invention, the fibre laying and/or placement device comprises a transmission line which has a cylindrical form and transfers liquid and/or gas fluid by the pressurization unit by means of the control unit. Thanks to the transmission line which has a cylindrical form, transfer of liquid and/or gas fluid into the pressurization chambers is provided easily and effectively.

In an embodiment of the present invention, the fibre laying and/or placement device comprises a first transmission line and a second transmission line having a cylindrical form and each having a different diameter from each other in order to fill the first pressurization chamber, the second pressurization chamber and the third pressurization chamber with liquid and/or gas fluid. Thanks to the transmission lines having different diameters, each pressurization chamber is enabled to be pressurized at least partially differently. Therefore, it is enabled that the compaction force is effectively applied for different composite laying mould surfaces.

In an embodiment of the present invention, the fibre laying and/or placement device comprises a compaction roller in which the first pressurization chamber is pressurized relatively higher than the second pressurization chamber and the third pressurization chamber. Therefore, it is enabled that the composite laying mould surface shape which has circular, oval, elliptical etc., corners is compacted effectively and quickly.

In an embodiment of the present invention, the fibre laying and/or placement device comprises at least one valve which is located on the body and allows control of the transfer, speed and pressure of the liquid and/or gas fluid transferred by the pressurization unit for a plurality of pressurization chambers that are each pressurized differently from each other. Therefore, transfer of liquid and/or gas fluid into the pressurization chambers by the pressurization unit is enabled to be controlled.

The fibre laying and/or placement device realized to achieve the object of the present invention is illustrated in the attached drawings, in which:
Figure 1 is a perspective view of the fibre laying and/or placement device.
Figure 2 is a schematic view of the compact roller.

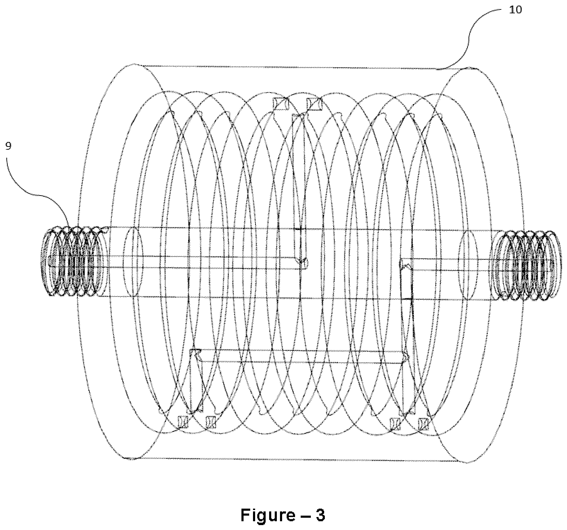

Figure 3 is a schematic view of the compact roller.
Figure 4 is a schematic view of the compact roller and the composite laying mould in the first position (I).
Figure 5 is a schematic view of the compact roller and the composite laying mould in the second position (II).

All the parts in the figures are individually assigned a reference numeral and the corresponding terms of these numbers are listed below:
1. Fibre Laying and/or Placement Device
2. Body
3. Control Unit
4. Pressurization Unit
5. Rod
6. Compaction Roller
7. Pressurization Chamber
   701. First Pressurization Chamber
   702. Second Pressurization Chamber
   703. Third Pressurization Chamber
8. Transmission Line
   801. First Transmission Line
   802. Second Transmission Line
9. Connection Element
10. Outer Layer
11. Temperature Sensing Element
12. Speed Sensing Element
13. Pressure Sensing Element
14. Valve

(E) Fibre
(K) Composite Laying Mould
(A) Fluid

(I) First Position
(II) Second Position

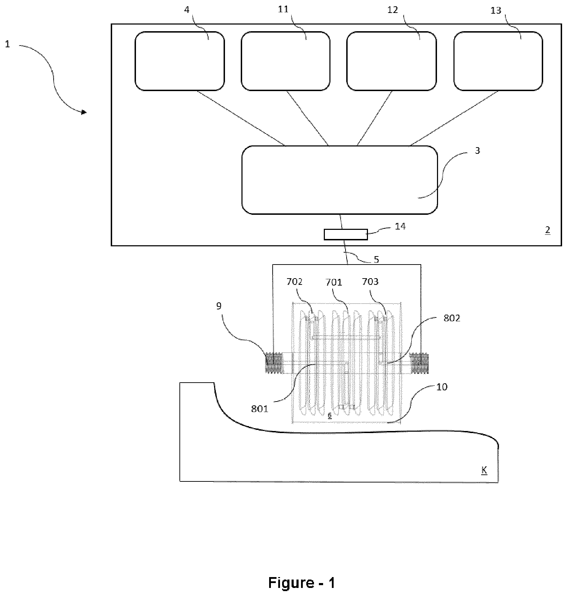

The fibre laying and/or placement device (1) comprises a body (2); a control unit (3) which is located on the body (2) and allows control of various features for fibre (E) laying and/or placement processes on a composite laying mould (K); a pressurization unit (4) which is located on the body (2) and allows liquid and/or gas fluid (A) to be stored and/or pressurized; a rod (5) extending outwardly from the body (2) and located movably on the body (2); at least one compaction roller (6) which is located on the rod (5) such that it is rotatable around its own axis, and applies compaction to the fibre (E) to enable the fibre (E) to be laid and/or placed on the composite laying mould (K); and at least one pressurization chamber (7) which is located in the compaction roller (6) and allows the liquid and/or gas fluid (A) transmitted by the pressurization unit (4) by means of the control unit (3) to be stored (Figure 1).

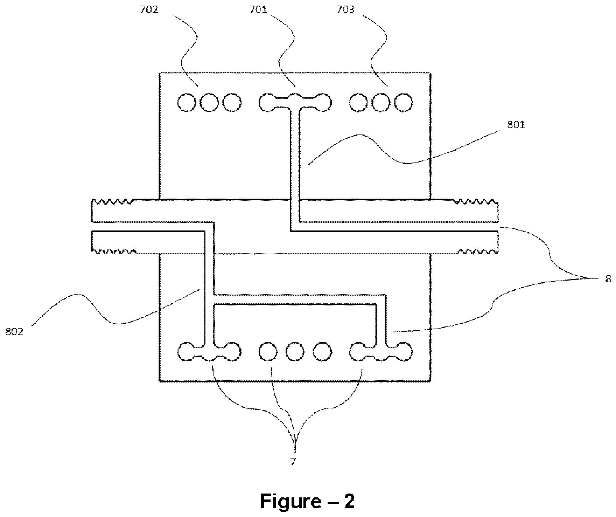

The fibre laying and/or placement device (1) of the invention comprises a compaction roller (6) which has a plurality of pressurization chambers (7) each pressurized differently from each other (Figure 2).

The compaction roller (6) performs the process of laying and/or placing fibre (E) on the composite laying mould (K) surface upon receiving command of the data such as pressure, temperature, speed which are predetermined by the user from the control unit (3). Liquid and/or gas fluid (A) is stored in the pressurization unit (4) by means of the control unit (3) for the process of laying and/or placing fibre (E) on the composite laying mould (K). There is provided at least one rod (5) which extends outwardly from the body (2) and moves by means of the control unit (3). At least one compaction roller (6) which is provided on the rod (5) and applies compaction for the process of laying and/or placing fibre (E) on the composite laying mould (K) surface is located such that it is rotatable around its own axis. Therefore, the process of laying and/or placing fibre (E) on the composite laying mould (K) surface is performed automatically. There is provided at least one pressurization chamber (7) which is filled with liquid and/or gas fluid (A) by the pressurization unit (4) by means of the control unit (3). Amount and/or pressure of the liquid and/or gas fluid (A) transferred to the pressurization chamber (7) by the pressurization unit (4) can be predetermined by the user.

The compaction roller (6) performs the process of laying and/or placing fibre (E) by means of the command received from the control unit (3) by automatically detecting the surface of the composite laying mould (K) and/or by detecting the surface of the composite laying mould (K) predetermined by the user. Thanks to a plurality of pressurization chambers (7) each pressurized differently from each other, the compaction roller (6) effectively performs compaction process according to the shape of the composite laying mould (K) surface. Thanks to the pressurization chambers (7) filled with liquid and/or gas fluid (A) by the pressurization unit (4) by means of the control unit (3) and each fed with a different pressure and/or a different amount, each pressurization chamber (7) is enabled to be pressurized individually and effectively. Therefore, the process of laying and/or placing fibre (E) on the composite laying mould (K) is performed effectively.

In an embodiment of the invention, the fibre laying and/or placement device (1) comprises at least one transmission line (8) which transmits liquid and/or gas fluid (A) into the pressurization chamber (7) by the pressurization unit (4) by means of the control unit (3). Thanks to the transmission line (8), the pressurization chambers (7) are enabled to be fed with liquid and/or gas fluid (A) transferred from the pressurization unit (4).

In an embodiment of the invention, the fibre laying and/or placement device (1) comprises a transmission line (8) which has a first transmission line (801) feeding the first pressurization chamber (701) and a second transmission line (802) feeding the second pressurization chamber (702), wherein the first transmission line (801) and the second transmission line (802) feed said pressurization chambers (701, 702) with liquid and/or gas fluid (A) at different amounts and/or pressures. The process of feeding the first pressurization chamber (701) located in the compaction roller (6) is enabled by the first transmission line (801). The process of feeding the second pressurization chamber (702) located in the compaction roller (6) is enabled by the second transmission line (802). The pressurization process is enabled to be controlled by feeding the first pressurization chamber (701) and the second pressurization chamber (702) by different transmission lines (8).

In an embodiment of the invention, the fibre laying and/or placement device (1) comprises a compaction roller (6) which has a first pressurization chamber (701) positioned between the second pressurization chamber (702) and the third pressurization chamber (703). Thanks to the variable forms of the pressurization chambers (7) inside the compaction roller (6) with this positioning, they are enabled to pressurize more effectively to any composite laying mould (K).

In an embodiment of the invention, the fibre laying and/or placement device (1) comprises a compaction roller (6) which has the first transmission line (801) transferring liquid and/or gas fluid (A) to the first pressurization chamber (701) by the pressurization unit (4).

The first transmission line (801) provides transmission of liquid and/or gas fluid (A) to the first pressurization chamber (701) by the pressurization unit (4) by means of the control unit (3). Therefore, it is controlled that the first pressurization chamber (701) is fed almost differently and at least partially with much more liquid and/or gas fluid (A) than the second pressurization chamber (702) and the third pressurization chamber (703) (Figure 2).

In an embodiment of the invention, the fibre laying and/or placement device (1) comprises a second transmission line (802) transferring liquid and/or gas fluid (A) to the second pressurization chamber (702) and the third pressurization chamber (703) by the pressurization unit (4). Therefore, it is controlled that the second pressurization chamber (702) and the third pressurization chamber (703) are fed with at least partially different liquid and/or gas fluid (A) from the first pressurization chamber (701).

In an embodiment of the invention, the fibre laying and/or placement device (1) comprises a compaction roller (6) in which the second pressurization chamber (702) and the third pressurization chamber (703) are pressurized by the pressurization unit (4) with liquid and/or gas fluid (A) at almost completely the same amount and/or pressure. Therefore, it is enabled that the second pressurization chamber (702) and the third pressurization chamber (703) apply almost the same compaction force.

In an embodiment of the invention, the fibre laying and/or placement device (1) comprises at least one connection element (9) which is located on the rod (5) such that it is rotatable around its own axis, and a compaction roller (6) almost completely surrounding the connection element (9). The compaction roller (6) located on the connection element (9) is located such that it can move partially parallel to the composite laying mould (K). With the rotational movement of the compaction roller (6), the process of fibre (E) laying is performed effectively for long products. Thanks to the connection element (9), position control of the compaction roller (6) is provided.

In an embodiment of the invention, the fibre laying and/or placement device (1) comprises a compaction roller (6) which is made of a flexible material. The flexible material comprises a thermoset and/or thermoplastic composite material. Thanks to the flexible material and due to the fact that the compaction roller (6) conforms to the surface of the composite laying mould (K), it provides an effective compaction.

In an embodiment of the invention, the fibre laying and/or placement device (1) comprises an outer layer (10) which is located on the compaction roller (6) and surrounds almost completely the pressurization chambers (7). The outer layer (10) enables that there is integrity between the pressurization chambers (7) and the composite laying mould (K) and that the pressurization chambers (7) are protected (Figure - 3).

In an embodiment of the invention, the fibre laying and/or placement device (1) comprises at least one temperature sensing element (11) which is located on the body (2) and transmits a temperature value to the control unit (3) in the fibre (E) laying and/or placement application performed on the composite laying mould (K). Therefore, temperature control is provided before and/or during the process.

In an embodiment of the invention, the fibre laying and/or placement device (1) comprises at least one speed sensing element (12) which is located on the body (2) and receives the data of rotational speed, angular speed of the compaction roller (6) from the control unit (3) in the fibre (E) laying and/or placement application performed on the composite laying mould (K). Therefore, speed control is provided before and/or during the process.

In an embodiment of the invention, the fibre laying and/or placement device (1) comprises at least one pressure sensing element (13) which is located on the body (2) and transmits data of pressure value to the control unit (3) in the fibre (E) laying and/or placement application performed on the composite laying mould (K). Therefore, pressure control is provided before and/or during the process.

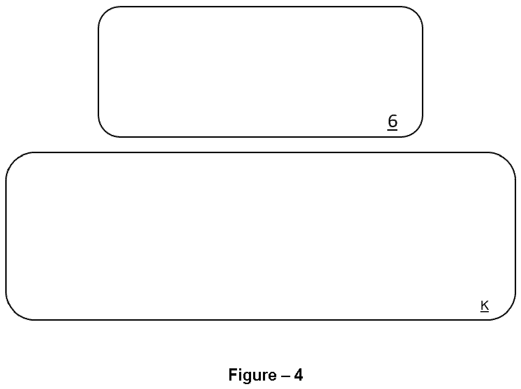

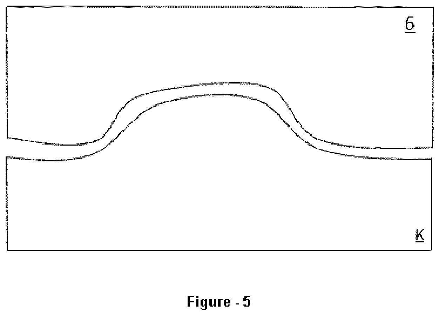

In an embodiment of the invention, the fibre laying and/or placement device (1) comprises a compaction roller (6) which has a first position (I) in which the compaction roller (6) is held in a cylindrical form by pressurizing the first pressurization chamber (701), the second pressurization chamber (702) and the third pressurization chamber (703) almost completely the same, and a second position (II) in which the compaction roller (6) is brought from the first position (I) by pressurizing each of the pressurization chambers at least partially differently. Therefore, the compaction roller (6) conforming to the surface shape of the composite laying mould (K) is enabled to perform compaction effectively (Figure 4 and Figure 5).

In an embodiment of the invention, the fibre laying and/or placement device (1) comprises a compaction roller (6) which has a cylindrical form in the first position (I), and an inclined form in the second position (II). Therefore, the compaction roller (6) conforming to the inclined surface form of the composite laying mould (K) is enabled to perform compaction effectively (Figure 5).

In an embodiment of the invention, the fibre laying and/or placement device (1) comprises a transmission line (8) which has a cylindrical form and transmits liquid and/or gas fluid (A) by the pressurization unit (4) by means of the control unit (3). Thanks to the transmission line (8) which has a cylindrical form, transmission of liquid and/or gas fluid (A) into the pressurization chambers (7) is provided effectively. Therefore, the compaction roller (6) which has become effectively conformed to the surface of the composite laying mould (K) enables the process of laying and/or placing fibre (E) to be quick, effective and efficient.

In an embodiment of the invention, the fibre laying and/or placement device (1) comprises a first transmission line (801) and a second transmission line (802) each having different cross sectional areas from each other and allowing the first pressurization chamber (701), the second pressurization chamber (702) and the third pressurization chamber (703) to be pressurized at least partially differently for feeding them with liquid and/or gas fluid (A). Due to the fact that the transmission lines (8) have different cross sectional areas and the liquid and/or gas fluid (A) are transmitted to the pressurization chambers (7) at different pressures, the pressurization chambers (7) are provided to be different from each other for each of the compaction force values. Thanks to having different pressure values, the pressurization chambers (7) conform to the form of composite laying mould (K) and they are enabled to apply the compaction force more effectively.

In an embodiment of the invention, the fibre laying and/or placement device (1) comprises a compaction roller (6) in which first pressurization chamber (701) is pressurized at least partially higher than the second pressurization chamber (702) and the third pressurization chamber (703). The first pressurization chamber (701) is enabled to be pressurized at least partially higher than the second pressurization chamber (702) and the third pressurization chamber (703). Due to the fact that the first pressurization chamber (701) receives much more pressure than the second pressurization chamber (702) and the third pressurization chamber (703), a more effective and quicker compaction is allowed to be performed at the elliptical, conical and/or circular parts of the composite laying mould (K) and/or at the corners of the composite laying mould (K).

In an embodiment of the invention, the fibre laying and/or placement device (1) comprises at least one valve (14) which is located on the body (2) and allows control of the transmission, speed and pressure of the liquid and/or gas fluid (A) transferred by the pressurization unit (4) for a plurality of pressurization chambers (7) that are each pressurized differently from each other. The valve (14), which is located on the body (2) such that it can be opened/closed, provides controlled transmission of the liquid and/or gas fluid (A) transferred from the pressurization unit (4).

## Claims

1. A fibre laying and/or placement device (1) comprising a body (2); a control unit (3) which is located on the body (2) and allows control of various features for fibre (E) laying and/or placement processes on a composite laying mould (K); a pressurization unit (4) which is located on the body (2) and allows liquid and/or gas fluid (A) to be stored and/or pressurized; a rod (5) extending outwardly from the body (2) and located movably on the body (2); at least one compaction roller (6) which is located on the rod (5) such that it is rotatable around its own axis, and applies compaction to the fibre (E) to enable the fibre (E) to be laid and/or placed on the composite laying mould (K); and at least one pressurization chamber (7) which is located in the compaction roller (6) and allows the liquid and/or gas fluid (A) transmitted by the pressurization unit (4) by means of the control unit (3) to be stored, wherein the compaction roller (6) has a plurality of pressurization chambers (7) **characterised in that** the pressurisation chambers (7) are each pressurized differently from each other.

2. A fibre laying and/or placement device (1) according to claim 1, **characterized by** at least one transmission line (8) which transmits liquid and/or gas fluid (A) into the pressurization chambers (7) by the pressurization unit (4) by means of the control unit (3).

3. A fibre laying and/or placement device (1) according to claim 2, **characterized by** a transmission line (8) which has a first transmission line (801) feeding a first pressurization chamber (701) and a second transmission line (802) feeding a second pressurization chamber (702), wherein the first transmission line (801) and the second transmission line (802) feed said pressurization chambers (701, 702) with liquid and/or gas fluid (A) at different amounts and/or pressures.

4. A fibre laying and/or placement device (1) according to claim 3, **characterized by** a compaction roller (6) which has a first pressurization chamber (701) positioned between the second pressurization chamber (702) and a third pressurization chamber (703).

5. A fibre laying and/or placement device (1) according to claim 3 or claim 4, **characterized by** a compaction roller (6) which has the first transmission line (801) transferring liquid and/or gas fluid (A) to the first pressurization chamber (701) by the pressurization unit (4).

6. A fibre laying and/or placement device (1) according to claim 4 or claim 5, **characterized by** a second transmission line (802) transferring liquid and/or gas fluid (A) to the second pressurization chamber (702) and the third pressurization chamber (703) by the pressurization unit (4).

7. A fibre laying and/or placement device (1) according to claims 4 to 6, **characterized by** a compaction roller (6) in which the second pressurization chamber (702) and the third pressurization chamber (703) are pressurized by the pressurization unit (4) with liquid and/or gas fluid (A) at almost completely the same amount and/or pressure.

8. A fibre laying and/or placement device (1) according to any of the preceding claims, **characterized by** at least one connection element (9) which is located on the rod (5) such that it is rotatable around its own axis, and a compaction roller (6) almost completely surrounding the connection element (9).

9. A fibre laying and/or placement device (1) according to any of the preceding claims, **characterized by** a compaction roller (6) which is made of a flexible material.

10. A fibre laying and/or placement device (1) according to any of the preceding claims, **characterized by** at least one temperature sensing element (11) which is located on the body (2) and transmits a temperature value to the control unit (3) in the fibre (E) laying and/or placement application performed on the composite laying mould (K).

11. A fibre laying and/or placement device (1) according to any of the preceding claims, **characterized by** at least one speed sensing element (12) which is located on the body (2) and receives the data of rotational speed, angular speed of the compaction roller (6) from the control unit (3) in the fibre (E) laying and/or placement application performed on the composite laying mould (K).

12. A fibre laying and/or placement device (1) according to any of the preceding claims, **characterized by** at least one pressure sensing element (13) which is located on the body (2) and transmits data of pressure value to the control unit (3) in the fibre (E) laying and/or placement application performed on the composite laying mould (K).

13. A fibre laying and/or placement device (1) according to claims 4 to 12, **characterized by** a compaction roller (6) which has a first position (I) in which the compaction roller (6) is held in a cylindrical form by pressurizing the first pressurization chamber (701), the second pressurization chamber (702) and the third pressurization chamber (703) almost completely the same, and a second position (II) in which the compaction roller (6) is brought from the first position (I) by pressurizing each of the pressurization chambers at least partially differently.

14. A fibre laying and/or placement device (1) according to claims 4 to 13, **characterized by** a first transmission line (801) and a second transmission line (802) each having different cross sectional areas from each other and allowing the first pressurization chamber (701), the second pressurization chamber (702) and the third pressurization chamber (703) to be pressurized at least partially differently for feeding them with liquid and/or gas fluid (A).

15. A fibre laying and/or placement device (1) according to any of the preceding claims, **characterized by** at least one valve (14) which is located on the body (2) and allows control of the transmission, speed and pressure of the liquid and/or gas fluid (A) transferred by the pressurization unit (4) for the plurality of pressurization chambers (7) that are each pressurized differently from each other.

## Patentansprüche

1. Faserlege- und/oder Faserplatzierungsvorrichtung (1) mit einem Körper (2), einer Steuereinheit (3), die sich an dem Körper (2) befindet und die es ermöglicht, verschiedene Merkmale für Prozesse zum Legen und/oder Platzieren von Fasern (E) auf eine Verbundwerkstofflegeform (K) zu steuern, einer Druckbeaufschlagungseinheit (4), die an dem Körper (2) angeordnet ist und die es ermöglicht, dass flüssiges und/oder gasförmiges Fluid (A) gespeichert und/oder unter Druck gesetzt wird, einer Stange (5), die von dem Körper (2) nach außen verläuft und beweglich an dem Körper (2) angeordnet ist; wenigstens einer Verdichtungsrolle (6), die sich an der Stange (5) befindet, so dass sie um ihre eigene Achse drehbar ist, und die eine Verdichtung der Fasern (E) bewirkt, um das Verlegen und/oder Platzieren der Fasern (E) auf der Verbundwerkstofflegeform (K) zu ermöglichen, und wenigstens einer Druckbeaufschlagungskammer (7), die sich in der Verdichtungsrolle (6) befindet und die es erlaubt, dass durch die Steuereinheit (3) von der Druckbeaufschlagungseinheit (4) weitergeleitetes flüssiges und/oder gasförmiges Fluid (A) gespeichert wird, wobei die Verdichtungsrolle (6) eine Mehrzahl von Druckbeaufschlagungskammern (7) hat, **dadurch gekennzeichnet, dass** die Druckbeaufschlagungskammern (7) jeweils unterschiedlich voneinander mit Druck beaufschlagt werden.

2. Faserlege- und/oder Faserplatzierungsvorrichtung (1) nach Anspruch 1, **gekennzeichnet durch** wenigstens eine Übertragungsleitung (8), die mittels der Steuereinheit (3) von der Druckbeaufschlagungseinheit (4) gefördertes flüssiges und/oder gasförmiges Fluid (A) in die Druckbeaufschlagungskammern (7) leitet.

3. Faserlege- und/oder Faserplatzierungsvorrichtung (1) nach Anspruch 2, **gekennzeichnet durch** eine Übertragungsleitung (8), die eine erste Übertragungsleitung (801), die eine erste Druckbeaufschlagungskammer (701) versorgt, und eine zweite Übertragungsleitung (802) hat, die eine zweite Druckbeaufschlagungskammer (702) versorgt, wobei die erste Übertragungsleitung (801) und die zweite Übertragungsleitung (802) die Druckbeaufschlagungskammern (701, 702) mit flüssigem und/oder gasförmigem Fluid (A) in verschiedenen Mengen und/oder mit unterschiedlichen Drücken versorgen.

4. Faserlege- und/oder Faserplatzierungsvorrichtung (1) nach Anspruch 3, **gekennzeichnet durch** eine Verdichtungsrolle (6), die eine erste Druckbeaufschlagungskammer (701) hat, die zwischen der zweiten Druckbeaufschlagungskammer (702) und einer dritten Druckbeaufschlagungskammer (703) positioniert ist.

5. Faserlege- und/oder Faserplatzierungsvorrichtung (1) nach Anspruch 3 oder Anspruch 4, **gekennzeichnet durch** eine Verdichtungsrolle (6), die eine erste Übertragungsleitung (801) hat, die flüssiges und/oder gasförmiges Fluid (A) durch die Druckbeaufschlagungseinheit (4) zu der ersten Druckbeaufschlagungskammer (701) fördert.

6. Faserlege- und/oder Faserplatzierungsvorrichtung (1) nach Anspruch 4 oder Anspruch 5, **gekennzeichnet durch** eine zweite Übertragungsleitung (802), die durch die Druckbeaufschlagungseinheit (4) flüssiges und/oder gasförmiges Fluid (A) zu der zweiten Druckbeaufschlagungskammer (702) und der dritten Druckbeaufschlagungskammer (703) liefert.

7. Faserlege- und/oder Faserplatzierungsvorrichtung (1) nach Ansprüchen 4 bis 6, **gekennzeichnet durch** eine Verdichtungsrolle (6), in der die zweite Druckbeaufschlagungskammer (702) und die dritte Druckbeaufschlagungskammer (703) durch die Druckbeaufschlagungseinheit (4) mit flüssigem und/oder gasförmigem Fluid (A) mit fast vollständig gleicher Menge und/oder gleichem Druck mit Druck beaufschlagt werden.

8. Faserlege- und/oder Faserplatzierungsvorrichtung (1) nach einem der vorhergehenden Ansprüche, **gekennzeichnet durch** wenigstens ein Verbindungselement (9), das sich an der Stange (5) befindet, so dass es um seine eigene Achse drehbar ist, und eine Verdichtungsrolle (6), die das Verbindungselement (9) fast vollständig umgibt.

9. Faserlege- und/oder Faserplatzierungsvorrichtung (1) nach einem der vorhergehenden Ansprüche, **gekennzeichnet durch** eine Verdichtungsrolle (6), die aus einem flexiblen Material hergestellt ist.

10. Faserlege- und/oder Faserplatzierungsvorrichtung (1) nach einem der vorhergehenden Ansprüche, **gekennzeichnet durch** wenigstens ein Temperatursensorelement (11), das sich an dem Körper (2) befindet und einen Temperaturwert in der auf der Verbundwerkstofflegeform (K) ausgeführten Anwendung des Verlegens und/oder der Platzierung von Fasern (E) zu der Steuereinheit (3) sendet.

11. Faserlege- und/oder Faserplatzierungsvorrichtung (1) nach einem der vorhergehenden Ansprüche, **gekennzeichnet durch** wenigstens ein Geschwindigkeitsmesselement (12), das sich an dem Körper (2) befindet und die Daten der Drehzahl, Winkelgeschwindigkeit der Verdichtungsrolle (6) von der Steuereinheit (3) in der auf der Verbundwerkstofflegeform (K) durchgeführten Anwendung des Verlegens und/oder der Platzierung von Fasern (E) empfängt.

12. Faserlege- und/oder Faserplatzierungsvorrichtung (1) nach einem der vorhergehenden Ansprüche, **gekennzeichnet durch** wenigstens ein Drucksensorelement (13), das sich an dem Körper (2) befindet und Daten der Druckwerte in der auf der Verbundwerkstofflegeform (K) durchgeführten Anwendung des Verlegens und/oder der Platzierung von Fasern (E) zu der Steuereinheit (3) sendet.

13. Faserlege- und/oder Faserplatzierungsvorrichtung (1) nach Ansprüchen 4 bis 12, **gekennzeichnet durch** eine Verdichtungsrolle (6), die eine erste Stellung (I) hat, in der die Verdichtungsrolle (6) in einer zylindrischen Form gehalten wird, indem die erste Druckbeaufschlagungskammer (701), die zweite Druckbeaufschlagungskammer (702) und die dritte Druckbeaufschlagungskammer (703) in fast gleicher Weise mit Druck beaufschlagt werden, und eine zweite Stellung (II) hat, in die die Verdichtungsrolle (6) aus der ersten Stellung (I) gebracht wird, indem jede der Druckbeaufschlagungskammern wenigstens teilweise unterschiedlich mit Druck beaufschlagt wird.

14. Faserlege- und/oder Faserplatzierungsvorrichtung (1) nach Ansprüchen 4 bis 13, **gekennzeichnet durch** eine erste Übertragungsleitung (801) und eine zweite Übertragungsleitung (802), die jeweils unterschiedliche Querschnittsflächen zueinander haben und die es ermöglichen, die erste Druckbeaufschlagungskammer (701), die zweite Druckbeaufschlagungskammer (702) und die dritte Druckbeaufschlagungskammer (703) bei der Zufuhr von flüssigem und/oder gasförmigen Fluid (A) wenigstens teilweise unterschiedlich mit Druck beaufschlagt werden.

15. Faserlege- und/oder Faserplatzierungsvorrichtung (1) nach einem der vorhergehenden Ansprüche, **gekennzeichnet durch** wenigstens ein Ventil (14), das sich an dem Körper (2) befindet und die Übertragung, Geschwindigkeit und Druck von flüssigem und/oder gasförmigen Fluid (A) kontrolliert, das durch die Druckbeaufschlagungseinheit (4) für die Mehrzahl Druckbeaufschlagungskammern (7) weitergeleitet wird, die unterschiedlich zueinander mit Druck beaufschlagt werden.

## Revendications

1. Dispositif de pose et/ou de placement de fibres (1) comprenant un corps (2); une unité de commande (3) qui est située sur le corps (2) et permet de contrôler diverses caractéristiques pour la pose de fibres (E) et/ou les processus de placement sur un moule de pose composite (K); une unité de pressurisation (4) qui est situé sur le corps (2) et permet de stocker et/ou de pressuriser le liquide et/ou le fluide gazeux (A); une tige (5) s'étendant vers l'extérieur à partir du corps (2) et située de manière mobile sur le corps (2); au moins un rouleau de compactage (6) qui est situé sur la tige (5) de sorte qu'il soit rotatif autour de son propre axe, et applique un compactage à la fibre (E) pour permettre à la fibre (E) d'être posée et/ou placée sur le moule de pose composite (K); et au moins une chambre de pressurisation (7) qui est située dans le rouleau de compactage (6) et permet le liquide et/ou le fluide gazeux (A) transmis par l'unité de pressurisation (4) au moyen de l'unité de commande (3) pour être stocké, dans lequel le rouleau de compactage (6) a une pluralité de chambres de pressurisation (7) **caractérisé en ce que** les chambres de pressurisation (7) sont toutes pressurisées différemment les unes des autres.

2. Dispositif de pose et/ou de placement de fibres (1) selon la revendication 1, **caractérisé par** au moins une ligne de transmission (8) qui transmet le liquide et/ou le fluide gazeux (A) dans les chambres de pressurisation (7) par l'unité de pressurisation (4) au moyen de l'unité de commande (3).

3. Dispositif de pose et/ou de placement de fibres (1) selon la revendication 2, **caractérisé par** une ligne de transmission (8) qui a une première ligne de transmission (801) alimentant une première chambre de pressurisation (701) et une seconde ligne de transmission (802) alimentant une seconde chambre de pressurisation (702), dans lequel la première ligne de transmission (801) et la seconde ligne de transmission (802) alimentent lesdites chambres de pressurisation (701, 702) avec un liquide et/ou un fluide gazeux (A) à des quantités et/ou des pressions différentes.

4. Dispositif de pose et/ou de placement de fibres (1) selon la revendication 3, **caractérisé par** un rouleau de compactage (6) qui a une première chambre de pressurisation (701) positionnée entre la seconde chambre de pressurisation (702) et une troisième chambre de pressurisation (703).

5. Dispositif de pose et/ou de placement de fibres (1) selon la revendication 3 ou la revendication 4, **caractérisé par** un rouleau de compactage (6) qui possède la première ligne de transmission (801) transférant le liquide et/ou le fluide gazeux (A) à la première chambre de pressurisation (701) par l'unité de pressurisation (4).

6. Dispositif de pose et/ou de placement de fibres (1) selon la revendication 4 ou la revendication 5, **caractérisé par** une seconde ligne de transmission (802) transférant le liquide et/ou fluide gazeux (A) à la seconde chambre de pressurisation (702) et à la troisième chambre de pressurisation (703) par l'unité de pressurisation (4).

7. Dispositif de pose et/ou de placement de fibres (1) selon les revendications 4 à 6, **caractérisé par** un rouleau de compactage (6) dans lequel la seconde chambre de pressurisation (702) et la troisième chambre de pressurisation (703) sont pressurisées par l'unité de pressurisation (4) avec un liquide et/ou un fluide gazeux (A) à une quantité et/ou une pression presque entièrement identique.

8. Dispositif de pose et/ou de placement de fibres (1) selon l'une quelconque des revendications précédentes, **caractérisé par** au moins un élément de connexion (9) qui est situé sur la tige (5) de manière à pouvoir tourner autour de son propre axe, et par un rouleau de compactage (6) entourant presque complètement l'élément de connexion (9).

9. Dispositif de pose et/ou de placement de fibres (1) selon l'une quelconque des revendications précédentes, **caractérisé par** un rouleau de compactage (6) constitué d'un matériau souple.

10. Dispositif de pose et/ou de placement de fibres (1) selon l'une quelconque des revendications précédentes, **caractérisé par** au moins un élément de détection de température (11) qui est situé sur le corps (2) et transmet une valeur de température à l'unité de commande (3) lors de l'application de pose et/ou de placement de fibres (E) effectuée sur le moule de pose composite (K).

11. Dispositif de pose et/ou de placement de fibres (1) selon l'une quelconque des revendications précédentes, **caractérisé par** au moins un élément de détection de vitesse (12) qui est situé sur le corps (2) et reçoit les données de vitesse de rotation, de vitesse angulaire du rouleau de compactage (6) de l'unité de commande (3) dans l'application de pose et/ou de placement de fibres (E) effectuée sur le moule de pose composite (K).

12. Dispositif de pose et/ou de placement de fibres (1) selon l'une quelconque des revendications précédentes, **caractérisé par** au moins un élément de détection de pression (13) qui est situé sur le corps (2) et transmet des données de valeur de pression à l'unité de commande (3) lors de l'application de pose et/ou de placement de fibres (E) effectuée sur le moule de pose composite (K).

13. Dispositif de pose et/ou de placement de fibres (1) selon les revendications 4 à 12, **caractérisé par** un rouleau de compactage (6) qui a une première position (I) dans laquelle le rouleau de compactage (6) est maintenu dans une forme cylindrique en pressurisant la première chambre de pressurisation (701), la seconde chambre de pressurisation (702) et la troisième chambre de pressurisation (703) de manière presque identiques, et une seconde position (II) dans laquelle le rouleau de compactage (6) est amené de la première position (I) en pressurisant au moins partiellement différemment chacune des chambres de pressurisation.

14. Dispositif de pose et/ou de placement de fibres (1) selon les revendications 4 à 13, **caractérisé par** une première ligne de transmission (801) et une seconde ligne de transmission (802) ayant chacune des sections transversales différentes l'une de l'autre et permettant à la première chambre de pressurisation (701), à la seconde chambre de pressurisation (702) et à la troisième chambre de pressurisation (703) d'être pressurisées au moins partiellement différemment pour les alimenter en liquide et/ou fluide gazeux (A).

15. Dispositif de pose et/ou de placement de fibres (1) selon l'une quelconque des revendications précédentes, **caractérisé par** au moins une soupape (14) qui est située sur le corps (2) et permet de contrôler la transmission, la vitesse et la pression du liquide et/ou fluide gazeux (A) transféré par l'unité de pressurisation (4) pour la pluralité de chambres de pressurisation (7) qui sont chacune pressurisées différemment les unes des autres.
